# EUROPÄISCHE PATENTSCHRIFT

(11) **EP 0 752 464 B1**
(45) Veröffentlichungstag und Bekanntmachung des Hinweises auf die Patenterteilung: **21.04.1999**
(21) Anmeldenummer: 95810441.6
(22) Anmeldetag: 05.07.1995
(51) Int. Cl.: C11B 1/00

(54) **Mobile Vorrichtung zur Herstellung von Schmiermitteln und Treibstoffen auf pflanzlicher Basis**
Mobile device for producing lubricants and fuels made from plants
Dispositif mobile pour la production de lubrifiants et de carburants à base de plantes

(43) Veröffentlichungstag der Anmeldung: 08.01.1997
(73) Patentinhaber: K-MIDT GmbH, 1701 Freiburg (CH)
(72) Erfinder: Knopf, Ulrich C., Dr., CH-1701 Freiburg (CH)

(56) Entgegenhaltungen:
- DE-A- 2 533 171
- US-A- 4 361 590
- PATENT ABSTRACTS OF JAPAN vol. 2 no. 8 (C-77) [3782] ,20.Januar 1978 & JP-A-52 110708 (ISHIKAWAJIMA HARIMA JUKOGYO K.K.) 17.September 1977,

## Beschreibung

Pflanzliche Oele aus Oelsaaten werden seit langem in der Ernährung von Tier und Mensch eingesetzt und zur Herstellung von Nahrungs- und Futtermitteln verwendet. In der Schweiz werden dazu heute die Oelsaaten zentral, in grossen, industriellen Anlagen verarbeitet. Die anfallenden Produkte, das Oel und der Oelkuchen, werden hauptsächlich für Konsum- bzw. Futterzwecke eingesetzt.

Seit einiger Zeit bestehen Bestrebungen, pflanzliche Oele auch für die technische Verwendung einzusetzen, insbesondere als biologisch abbaubare, erneuerbare Erdölsubstitute, bzw. als Rohstoff zur Herstellung von Schmiermitteln und Treibstoffen (sog. Bio-, Oeko-, oder Natur-Diesel).

Was die Schmiermittel betrifft, eignet sich Pflanzenöl mit Zusätzen vor allem für die Verlustschmierung, d.h. dort wo ein Teil des Schmiermittels unvermeidlich in die Umwelt gelangt (zum Beispiel zur Schmierung von Kettensägen, Weichen, Seilbahnanlagen, usw.). Dies deshalb, weil die pflanzlichen Schmiermittel relativ rasch biologisch abbaubar sind und so die Luft, das Wasser und den Boden nicht verschmutzen.

Was die Treibstoffe auf Pflanzenölbasis betrifft, ist es einerseits möglich, pflanzliche Oele bestimmter Reinigungsstufe direkt in speziellen, sog. Vielstoff-Motoren, zu verbrennen, bzw. als Treibstoff zu verwenden.

Andererseits können pflanzliche Oele, entweder durch Zumischung von Erdölfraktionen und/oder Alkoholen/Alkoholderivaten, oder aber durch Veresterung mit Alkoholen so modifiziert und formuliert werden, dass sie als Treibstoff in konventionellen Dieselmotoren gebraucht werden können.

Der grosse Vorteil der Treibstoffe auf Pflanzenölbasis ist, dass sie erneuerbar sind und die Umwelt weniger belasten (kein, oder wenig Schwefel in den Abgasen, geringerer Treibhauseffekt, usw.).

Sowohl für die Herstellung von Schmiermitteln, wie auch für die Herstellung von Treibstoffen, werden an das Pflanzen-Oel andere Qualitätsanforderungen gestellt als bei dessen Verwendung zu Speise- und/oder Futterzwecken. Während zum Beispiel bei der Verwendung zu Speisezwecken der Geruch und die Farbe des Oels wesentliche Qualitätsmerkmale darstellen, sind diese Kriterien bei der Verwendung als Schmier- oder Treibstoff von untergeordneter, oder keiner Bedeutung. Auf der anderen Seite muss bei der Verwendung des Pflanzenöls als Erdölsubstitut zum Beispiel der biologischen Abbaubarkeit und den Verbrennungseigenschaften Beachtung geschenkt werden, während diese Faktoren bei der Verwendung zu Konsum- oder Futterzwecken von weniger grosser Bedeutung sind.

Demnach sind die Qualitätsanforderungen entscheidend für die Wahl des Herstellungsverfahrens und dieses wiederum beeinflusst die Herstellungskosten wesentlich. Ziel bei der Entwicklung von Erdölsubstituten aus Pflanzenöl muss daher immer eine für technische Zwecke spezifische Qualität sein, die mit minimalem Energie- und Kostenaufwand erreicht werden kann. Beides kann mit einer entsprechenden Verfahrenstechnik einerseits erreicht werden; andererseits kann ein neues Anlage- und Verarbeitungskonzept wesentlich zur Erreichung dieser Zielsetzung beitragen. Letzteres muss darauf abzielen, Umschlag, Transportwege und Lagerkosten der Oelsaat einerseits, der daraus erzielten Produkte (Oel und Kuchen) andererseits, möglichst zu reduzieren.

Unsere Erfindung besteht damit in einer kompakten voll-automatischen Anlage, die, weil mobil, erlaubt, dezentral, möglichst nahe an verschiedenen Produktionzentren, energiesparend, Oelsaaten zu Oel für technische Zwecke, zu Treibstoffen und Schmierölen und zu Kuchen als Futtermittel zu verarbeiten.

Die heute in der Schweiz bestehenden Anlagen zur Herstellung von raffinierten Pflanzenölen sind grosse, industrielle Anlagen. Ihre Verarbeitungskapazität liegt bei über 10'000 - 20'000 Tonnen Saat pro Jahr. Die Verarbeitung der Oelsaaten in diesen industriellen Gross-Anlagen bedingt verschiedene Schritte: Die Oel-Saat wird von den Landwirten zu den Annahmezentren gebracht, in denen sie gereinigt und mit fossiler Energie getrocknet wird, gefolgt von der Lagerung und dem Transport über weite Strecken in die industrielle Verarbeitungsanlage. Dort wird die Oel-Saat gemahlen, anschliessend meistens auf ca. 100^{o}C erwärmt und mit einer Schneckenpresse ausgepresst. Durch eine Extraktion wird das in den Pressrückständen, oder in den Saaten enthaltene Oel vollständig herausgelöst. Dazu werden Saaten, oder Pressrückstände während längerer Zeit mit einem Lösungsmittel (Hexan) gewaschen. Das so erhaltene Oel wird als Rohöl bezeichnet. Der gleichzeitig entstandene ölfreie Rückstand (Kuchen) wird getrocknet und das abgedampft Hexan kann als Lösungsmittel wiederverwendet verwendet werden. Das Rohöl wird anschliessend raffiniert. Die Raffination umfasst verschiedene Schritte. Durch Zugabe von Natronlauge (NaOH) werden die freien Fettsäuren im Oel neutralisiert und evt. vorhandene Schleimstoffe entfernt. Anschliessend wir das Oel mit Wasser gewaschen und zwar solange, bis es völlig seifenfrei ist. Danach wird das neutralisierte Oel mit Bleicherde behandelt, um unerwünschte Farbstoffe zu absorbieren. Die anschliessende Filtration trennt die Bleicherde vom Oel. Es folgt die Winterisierung, in der das gebleichte Oel tiefgekühlt und wieder filtriert wird. Dadurch werden unerwünschte Wachsstoffe vom Oel getrennt. Schliesslich wird das winterisierte Oel desodoriert. Dazu wird es unter Vakuum bis auf 200^{o} C erhitzt. Durch das Einleiten von Wasserdampf werden störende Geruchs- und Geschmackstoffe entfernt. Das so raffinierte Pflanzenöl wird anschliessend entweder gelagert, oder zu den Verbrauchern transportiert. Auch der Oelkuchen muss von den Verarbeitungszentren wieder zu den Futtermittelfabrikanten und den Landwirten zurücktransportiert werden.
Aus der Beschreibung ist offensichtlich, dass eine solche zentrale Verarbeitung der Oelsaaten langer Transportwege für Tausende von Tonnen Saatkörner, eines mehrfachen Umschlages, grosser Lagerkapazitäten und eines bedeutenden Energieaufwandes bedarf.

Dieser Aufwand kann mit unserer Erfindung reduziert werden. Aufgabe der Erfindung ist einerseits, die Energie für Transportwege, Umschlag und Lagerung der Saatkörner zu sparen, weil die Verarbeitungsanlage auf der Strasse, oder mit der Bahn möglichst nahe an die Produktionsgebiete von Oelsaaten - und nicht umgekehrt wie anhin - transportiert wird. Andererseits muss trotz den geringen Dimensionen eine hohe Qualität der in der Anlage fabrizierten Produkte (Rein-Oel, Schmier-Oel, Treibstoffe) erreicht werden. Diese Aufgaben können aber nur verwirklicht werden, wenn eine Anlage und ein Verfahren zur Verfügung stehen, die erlauben, die Oel-Saaten kostengünstig auf kleinem Raum zu verarbeiten und dennoch eine für die technische Verwendung notwendige Oel-Qualität erreicht werden kann. Zudem müssen die Anlage und das Verfahren geeignet sein, das gereinigte pflanzliche Oel zu Schmiermitteln und Treibstoffen weiterzuverarbeiten.

Gemäss unserer Erfindung wird die Verarbeitungsanlage für Oel-Saaten im Wesentlichen in einem relativ kleinen (Aussendimensionen von ca. 7000 mm Länge, 2500 mm Breite und 2500 mm Höhe) und leichten (ca. 2500 kg), wetterfesten, stabilen Kasten 1 untergebracht. Die Materialien für den Kasten werden so gewählt, dass der Boden möglichst stabil und von hoher punktueller Tragkraft ist, die Wände und die Dachpartie dagegen möglichst leicht sind, damit die für den Strassen-Transport bzw. die Mobilität beschränkte Nutzlast vorwiegend durch die Verarbeitungsmaschinerie genutzt werden kann und zudem eine möglichst hohe Verarbeitungkapazität erreicht werden kann. Entsprechend wird der Boden 2 durch ein Stahlprofil gebildet, auf das vorzugsweise eine Wanne aus einer mehrschichtigen Holz- und Aluminiumverbindung aufgeschraubt, oder aufgeschweisst wird. Diese Konstruktion ermöglicht eine hohe punktuelle Tragkraft. Die Wände 3 und die Decke 4 und Türen 7 der Anlage werden in Leichtbauweise, zum Beispiel aus Ferroplast-Elementen gebaut. Ferroplast-Elemente sind flächengeschäumte Sandwichkonstruktionen, bestehend aus verzinkten, dampfdiffusionsdichten Stahldeckschichten mit einem PolyurethanHartschaum-Isolierkern. Sie gewähren auch bei geringer Dicke (zum Beispiel 25 mm) eine gute Stabilität. Zudem bieten sie jedoch eine hervorragende thermische, wie auch eine gute Lärm-Isolation.
Durch die Decke 4 wird der von aussen füllbare Saattrichter 5 eingesetzt, der mit einem auf- und zuklappbaren Deckel 6 wetterfest abgeschlossen werden kann. Nur so ist es möglich den Trichter platzsparend, oberhalb der Presse 21 und der Wanne 22 u.a. auch energetisch richtig zu plazieren.
In der Decke 4 muss ein weiterer auf- und zuklapparer Deckel 11 montiert werden, der ermöglicht, durch eine Oeffnung die einzelnen relativ hohen, starren, Filterelemente in die ebenso relativ hohe Filtrieranlage 30 ein- und auszubauen.
Die Anlage steht in der Arbeitsstellung auf vier zum/beim Transport einklappbaren Stützen 13. Diese sind vorzugsweise ca. 1 m 30 cm lang so dass der Boden des Kastens ebenso ca. 1 m 30 cm, im allgemeinen mindestens 80 cm, aber maximal 150 cm über der Abstellfäche zu liegen kommt. Diese erhöhte Konstruktion hat den grossen Vorteil, dass bei der Verarbeitung sowohl die für die Fassung des Rein-Oels notwendigen Flüssigkeitsbehälter 35 als auch die Behälter 27 für die Fassung des Oelkuchens (Container, Kisten, Palloxen, Big-Bags), oder Transportgeräte (Förderbänder, Saugrohre, Förderschnecken), unter die Verarbeitungsanlage gestellt und so die in der Anlage anfallenden Produkte wettergeschützt und ausschliesslich unter Verwendung der natürlichen Schwerkraft abgefüllt werden können. Für den Transport bzw. die Verlegung der Anlage hat diese Konstruktion den Vorteil, dass die Anlage, ohne Neigung und zusätzliche Hilfsmittel (Kranen) auf einen entsprechenden Lastwagen, einen Anhänger 12 , oder Bahnwagen gebracht werden kann.
Der Zugang ins Innere der Anlage wird durch eine bis drei Türen 7 gewährleistet zu denen Treppen 14, oder Leitern führen.

Damit die Anlage so kompakt gebaut und auch energiesparend produzieren kann, braucht es zudem eine Einrichtung für eine geeignete Verfahrenstechnik:

In der Anlage wird die Oel-Saat 19 bereits im Saattrichter 5 vorgewärmt. Dies ist möglich, weil durch den Einbau der Saattrichter aus wärmeleitendem Material in die Decke der Anlage, die Abwärme der Maschinen auch auf die Trichter übertragen werden kann. Die Konstruktion der Trichter wird zudem so gestaltet, dass die Seitenwände eine relativ geringe Neigung haben, so dass die Oel-Saat möglichst nahe und langsam an den von unten erwärmten Wänden herunterfliesst und sich dabei erwärmt. Der Trichter erhält so die Ausgestaltung und die Funktion eines Speicher-Wärme-Behälters.

Vom Trichter 5 fliessen die Saatkörner 19 infolge der Schwerkraft in einen Durchlauf-Wärme-Trockner 16. Der Durchlauf-Wärme-Trockner ist im wesentlichen ein Kasten, der auf zwei Seiten mit einem Sieb versehen ist, durch die Luft, aber nicht die Saatkörner, dringen kann/können. Während die Saatkörner von oben nach unten hindurchlaufen, wird mittels eines Ventilators 17 ein warmer Luftstrom durch die Siebe und die Saat hindurchgesogen, oder gepresst und danach nach aussen abgeleitet. Dabei entspricht die im Luftstrom enthaltene Wärme ausschliesslich der Abwärme aus dem Innern der Anlage, die einerseits durch die starke Reibung beim Pressvorgang und andererseits durch den Betrieb der Motoren/Kompressoren bzw. der Anlageteile entsteht. Durch diese Durchlauf-Wärme-Trocknung wird der Oel-Saat einerseits unerwünschte Feuchtigkeit entzogen; andererseits wird die Oel-Saat erwärmt, wodurch sich die Oelausbeute beim Pressvorgang wesentlich verbessern lässt. Gleichzeitig dient der Durchlauf-Wärmetrockner der Durchlüftung bzw. der Abfuhr der Warmluft vom Innern der Anlage nach aussen.
Nach der Durchlauf-Wärme-Trocknung kommen die getrockneten und erwärmten Saatkörner in eine Schneckenpresse 21, mit der das Oel ausgepresst wird. Die Schneckenpresse 21 wird unmittelbar unter dem Durchlauf-Wärme-Trockner 16 , jedoch gleichzeitig über einer Wanne 22 angebracht, so dass das gepresste, noch warme Roh-Oel inkl. feste Verunreinigungen, mit Hilfe der Schwerkraft direkt in die Wanne 22 fliessen kann.

Die beim Pressvorgang verbleibende Press-Kuchen gelangt von den Pressen in einen Gegenstrom-Kühler 25. Kühlen des Kuchens ist notwendig um seine Haltbarkeit zu gewährleisten. Der durch die Reibung der Presse über 50^{o}C warme Kuchen wird mit einer Transportvorrichtung unmittelbar am Ausgang 24 der Presse abgefangen und in eine Richtung transportiert, während zum Beispiel mit Hilfe eines Ventilators 17 kühlere Luft aus dem Innern der Anlage, oder aber von ausserhalb der Anlage in die der Transportrichtung entgegengesetzte Richtung geblasen wird. Dies bewirkt, dass sich die Luft im Transportkanal mit zunehmendem Weg mehr und mehr erwärmt, während der Kuchen mit zunehmender Transportstrecke mehr und mehr abgekühlt wird. Die so erzeugte Warmluft kann beim Ausgang des Transportkanals abgefangen und in den Durchlauf-Wärme-Trockner, oder aber nach aussen abgeleitet werden. Nach erfolgter Kühlung/Trocknung fällt der Kuchen infolge seiner Schwerkraft durch eine Oeffnung 26 im Boden in einen Behälter 27, oder Sack, der wettergeschützt unter der Anlage befestigt, oder gestellt wird.

In der Wanne 22 kann das Oel je nach Verwendungszweck und gewünschtem Reinigungsgrad bereits mit Additiven (chemischen Substanzen) versehen werden. Mit Hilfe einer Mischvorrichtung 23 (Rührwerk u.a.) können in derselben Wanne die im Rohöl vorhandenen Verunreinigungen bzw. Partikel gleichförmig suspendiert werden. Dies erlaubt, das Rohölgemisch als homogene Suspension zu erhalten und abzusaugen und mit einer Pumpe 28 entsprechend gleichförmig durch eine Leitung 29 in die Filtrieranlage 30 mit mehreren Filter-Elementen zu pressen. Die Filter-Elemente werden so gebaut, dass grossporige Filter mit kleiner-porigen Filtern in Serie geschaltet werden. Zudem wird die Porengrösse der Filter so gewählt, dass sich die im Rohöl vorhandenen Verunreinigungen auf dem äussersten Filter ansammeln und so bei einer gewissen Schichtdicke ihrerseits einen wichtigen Feinfiltrationseffekt zur Folge haben. Nachdem sich bei einer solchen Anordnung auf den Filtern laufend mehr festes Material ansammelt, müssen diese zudem so konstruiert und angeordnet werden, dass man nach einer bestimmten Zeit ausschliesslich komprimierte Luft aus dem Behälter 32 durch die Leitung 43 durch die Filter hindurchpressen kann. Dies, um die filtrierten Festteile (den sog. Filter-Kuchen), die sich auf den Filtern angesammelt haben, zu trocknen. Dieser Trocknungsvorgang erlaubt, die festen Teile relativ leicht (zum Beispiel durch Rütteln) von den Filtern zu trennen und durch eine Oeffnung im Boden 40 in einen darunter stehenden Behälter zu leiten. Diese Installation ermöglicht den ganzen Vorgang zu automatisieren. Bei der Filtration einer homogenen Oel-Suspension ist es auf diese Weise nämlich möglich, in regelmässigen Perioden abwechslungsweise zu filtrieren, zu trocknen und zu rütteln, so dass der ganze Reinigungs-Vorgang elektronisch gesteuert, automatisiert und damit kontinuierlich gestaltet werden kann.

Das so gereinigte Oel (Rein-Oel) kann direkt durch eine Oeffnung 34 im Boden der Anlage abgeleitet und in einen darunter stehenden Behälter 35 abgefüllt werden, über die Leitung 36 zur Weiterverarbeitung zu Schmiermitteln und Treibstoffen in die Wanne 22 zurück-, oder aber über die Leitung 37 direkt in einen Vielstoff-Motor/Generator 38 zur Wärme-Kraft und Elektrizitäts-Erzeugung geleitet werden. Mit der mit dem Generator erzeugten Elektrizität kann die Anlage betrieben werden . Auch die Rückspeisung der Elektrizität in das Netz ist denkbar. Die mit dem Vielstoff-Motor erzeugte Wärme wird wie oben beschrieben einerseits im Saat-Durchlauf-Wärme-Trockner verwendet, andererseits kann sie auch aus der Anlage abgeführt, bzw. ausserhalb der Anlage weiterverwendet werden. Die Anlage wird damit zu einer kompakten Bio-Energie Produktions-Anlage.

Die Anlage ist zudem so konzipiert, dass das darin produzierte Rein-Oel mit Hilfe der mit einer Misch-Vorrichtung 23 versehenen Wanne 22 zu Schmiermitteln und Treibstoffen für konventionelle Dieselmotoren weiterverarbeitet werden kann.
Die Aufarbeitung von Rein-Oel zu Schmiermitteln beinhaltet nämlich die Zugabe von chemischen Zusätzen die dem reinen (mehr oder weniger warmen) Pflanzenöl beigemischt werden müssen.
Ebenso ist seit einiger Zeit bekannt, dass sich Gemische von Pflanzenöl mit Alkoholen bzw. Alkoholderivaten und einer Erdölfraktion, als Treibstoffe für konventionelle Dieselmotoren eignen. Diese Gemische können ebenso mit der erfindungsgemässen Anlage in der Wanne 22 hergestellt werden.

### Beispiel:

Eine erfindungsgemäss konstruierte Anlage hat die Aussendimensionen von ca. 7000 mm Länge, 2500 mm Breite und 2500 mm Höhe. Sie steht in Arbeitsstellung auf vier Füssen, 1300 mm über der Abstellfläche. Sie kann pro Tag 4800 kg Saat verarbeiten und entsprechend 1600 kg Rein-Oel und ca. 3200 kg Kuchen (Futtermittel) produzieren. Die theoretische Verarbeitungskapazität der Anlage beträgt damit ca. 1'600 Tonnen Oel-Saat pro Jahr. Sie wiegt in der Transportstellung ca. 9 Tonnen und in Arbeitsstellung bis ca. 14 Tonnen. Das Rein-Oel kann in der erfindungsgemässen Anlage als Treibstoff für Vielstoff-Motoren und/oder mit entsprechenden Additiven zu Schmiermitteln und/oder mit Alkoholen und Erdölfraktionen zu Treibstoff für konventionelle Dieselmotoren aufgearbeitet werden. Diese Anlage kann infolge ihrer Dimensionen und ihrem Gewicht unter Einhaltung der bestehenden Normen, Vorschriften und Gesetze sehr leicht auf der Strasse und/oder mit der Bahn transportiert werden.

Eine erfindungsgemässe Ausführungsform der Anlage wird in den Abbildungen erläutert, ohne dass dabei die Erfindung in irgend einer Weise eingeschränkt werden soll.

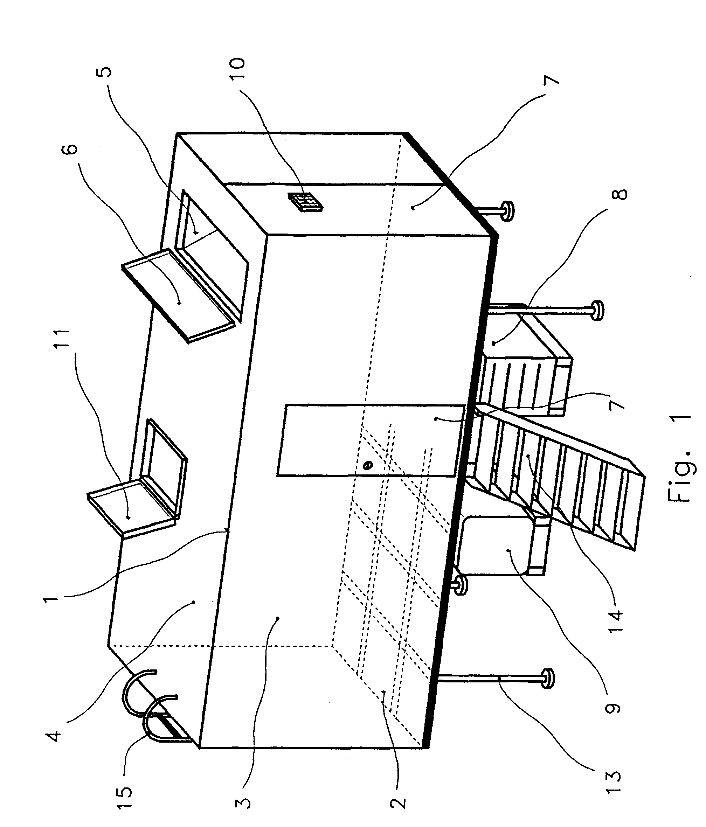

Fig. 1 zeigt eine erfindungsgemässe Anlage in Arbeitsstellung, d.h. auf Stützen (13) in einer perspektivischen Ansicht. Sie besteht im wesentlichen in einem wetterfesten, stabilen Kasten 1 mit Aussendimensionen von ca. 7000 mm Länge, 2500 mm Breite und 2500 mm Höhe. Der Boden 2 wird so konstruiert, dass er möglichst stabil und von hoher punktueller Tragkraft ist, während die Wände 3 und die Decke 4 möglichst leicht konstruiert werden, jedoch eine sehr gute thermische und gute Lärm-Isolation aufweisen müssen. Durch die Decke 4 wird der von aussen füllbare Saattrichter 5 geführt, der mit einem Deckel 6 wetterfest abgeschlossen werden kann. Der Zugang für das Einrichten, Warten und Bedienen der Anlage wird durch 2 - 3 Türen 7 gewährleistet. Zu den Türen führt eine mobile Treppe (14). Unter der Anlage und vom Wetter geschützt kann man einen, oder mehrere Behälter 8 zum Auffangen des Kuchens und einen solchen 9 zum Auffangen des Rein-Oels stellen. 10 stellt den Austritt der Warmluft dar, die weitergeleitet und zu Heiz- und Trocknungszwecken weiterverwendet werden kann. 11 stellt eine Oeffnung dar, die erlaubt, von oben und ausserhalb der Anlage stehend die starren Filter-Elemente in die Filtrier-Anlage ein- oder auszubringen, bzw. auszuwechseln. 15 zeigt die Leiter, die notwendig ist, auf die Decke zu steigen, um Arbeiten bei den Oeffnungen auszuführen.

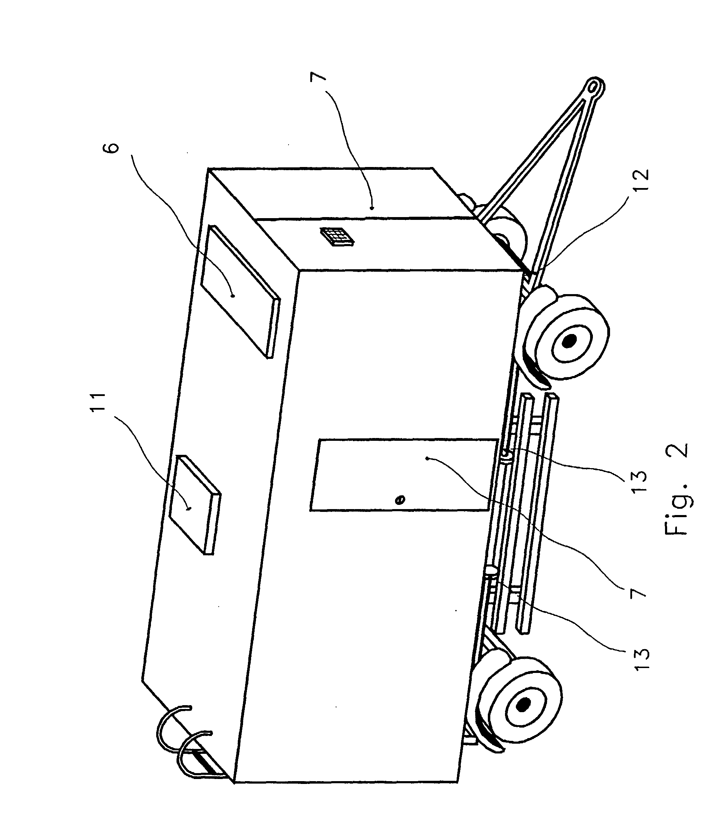

Fig. 2 zeigt die erfindungsgemässe Anlage unter die - für den Transport auf der Strasse - eine entsprechend ausgestaltete Transportvorrichtung mit vier Rädern 12 geschoben wurde. Die Deckel zum Saattrichter 6 und zum Auswechseln der Filter-Elemente 11, sowie die Türen 7 sind geschlossen. Die in der Arbeitsstellung gebrauchten Stützfüsse 13 werden für den Transport eingefahren bzw. eingeklappt.

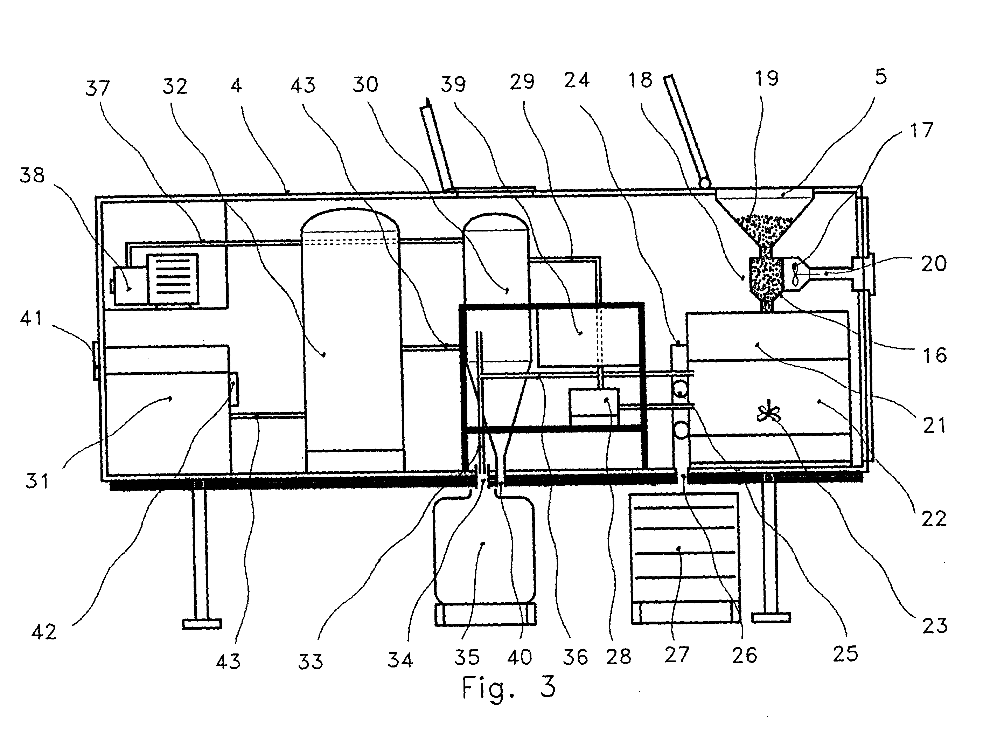

Fig. 3 zeigt einen Querschnitt durch die Anlage. 5 zeigt den in das Dach 4 der Anlage eingebauten Saattrichter von wo die Saatkörner 19 direkt in den Durchlauf-Wärme-Trockner 16 geleitet werden. Die Luft wird durch den Ventilator 17 beim Sieb 18 angesogen, durch die Saatkörner 19 gesogen und anschliessend durch den Lüftungs-Kanal 20 aus der Anlage befördert. Die im Durchlauf-Wärme-Trockner getrockneten und erwärmten Saatkörner gelangen anschliessend in die Schneckenpresse 21. Das dort gepresste Oel wird in die Wanne 22 geleitet, während der Presskuchen bei 24 in den Durchlauf-Kühler 25 fällt. Nach dem Durchlauf-Kühler gelangt der Kuchen durch eine Oeffnung 26 im Boden nach aussen, in einen unter der Anlage stehenden Behälter 27. Das Rohöl wird mit einer Pumpe 28 durch die Leitung 29 in die Filtrieranlage 30 gebracht. Die zur Filter-Kuchen-Trocknung und -Entfernung notwendige Luft wird mit dem Kompressor 31 komprimiert und im Behälter 32 gespeichert von wo sie bei Bedarf über die Leitung 43 zur Filtrieranlage 30 geleitet wird. Das Rein-Oel verlässt die Anlage über die Leitung 33 und einer Oeffnung 34 im Boden nach aussen und wird in einem unter der Anlage stehenden Behälter 35 gesammelt, oder wird über die Leitung 36 zurück zur Wanne 22 zur Weiterverabeitung geleitet; schliesslich kann sie auch über die Leitung 37 direkt zu einem Vielstoff-Motor/Generator 38 gebracht werden. Die ganze Anlage ist mit einer elektronischen Steuerung 39 versehen, damit sie vollautomatisch betrieben werden kann. 40 stellt die Oeffnuna dar durch die der Filterkuchen durch die eigene Schwerkraft nach aussen in einen Behälter gelangt. 41 ist die Oeffnung die dem Kompressor erlaubt, kühle Frischluft von aussen anzusaugen. 42 stellt den Auslass der (warmen) Luft aus dem Kompressor dar.

## Patentansprüche

1. Vorrichtung zur Herstellung von gereinigten, pflanzlichen Oelen aus Saatkörnern, umfassend mindestens einen die Saatkörner auffangenden Trichter (5), mindestens eine darunter stehende Schneckenpresse (21), mindestens eine darunter stehende Wanne (22), eine Filtrieranlage (30) mit einem Mittel (28) zur Förderung des Oels, dadurch gekennzeichnet, dass die Vorrichtung kompakt in einen transportierbaren Kasten (1) eingebaut ist, der in der Decke (4) eine mit einem Deckel (6) auf- und zuschliessbare Oeffnung aufweist unter welcher der Trichter (5) angeordnet ist, der zum Einfüllen der Saatkörner dient, und der Kasten im Boden und/oder auf der Seite Oeffnungen (34, 26, 40) aufweist, durch die das Oel und der Oelkuchen nach aussen gelangen können.

2. Vorrichtung gemäss Anspruch 1, dadurch gekennzeichnet, dass der Kasten (1) in der Arbeitsposition auf mindestens vier, vertikalen, Stützen (13) steht, so dass der Boden des Kastens je nach Länge der Stützen mindestens 80 cm, maximal 150 cm über der Abstellfläche steht, wobei die vertikalen Stützen für den Transport des Kastens umklappbar, einziehbar, oder wegnehmbar sind.

3. Vorrichtung gemäss Anspruch 1 oder 2, dadurch gekennzeichnet, dass der Boden des Kastens aus einem verschweissten Stahlprofil und einer darauf geschraubten, oder geschweissten Wanne aus mehreren miteinander verklebten Holz- und Aluminiumschichten besteht.

4. Vorrichtung gemäss einem der Ansprüche 1 bis 3 dadurch gekennzeichnet, dass die Wände und das Dach des Kastens aus Elementen zusammengesetzt sind, die aus verzinktem, dampfdiffusionsdichten Stahldeckschichten mit einem Polyurethan Hartschaum Isolierkern versehen sind.

5. Vorrichtung gemäss einem der Ansprüche 1 bis 4, dadurch gekennzeichnet, dass die Filtrieranlage (30) entfernbare Filterelemente aufweist, die durch eine zusätzliche auf- und zuschliessbare Oeffnung (11) von ausserhalb des Kastens in die Filtrieranlage (30) ein- und ausgeführt werden können.

6. Vorrichtung gemäss einem der Ansprüche 1 bis 5 dadurch gekennzeichnet, dass sie einen Luftkompressor (31) und einen Luftspeicher (32) enthält, die der Trocknung und der Entfernung der aus dem Oel filtrierten festen Bestandteile dienen.

7. Vorrichtung gemäss einem der Ansprüche 1 bis 6 dadurch gekennzeichnet, dass sie zusätzlich mit einem Mittel (23) zum Mischen von Flüssigkeiten und Suspendieren von festen Teilchen versehen ist.

8. Vorrichtung gemäss einem der Ansprüche 1 bis 7, dadurch gekennzeichnet, dass der Trichter (5) aus einem wärmeleitenden Material besteht und ein Mittel (17) für die Zuführung von warmer Innenluft an die Aussenwand des Trichters vorgesehen ist, derart, dass die Wärme der Innenluft auf den Trichter (5) übertragen werden kann.

9. Vorrichtung gemäss einem der Ansprüche 1 bis 8, dadurch gekennzeichnet, dass zwischen dem Trichter (5) und der Schneckenpresse (21) eine Vorrichtung (16, 17, 20) zum Wärmen und Trocknen der Saatkörner (19) angebracht ist.

10. Vorrichtung gemäss einem der Ansprüche 1 bis 9, dadurch gekennzeichnet, dass sie eine Förderapparatur enthält (24), mit welcher der beim Pressvorgang entstehende Presskuchen transportiert werden kann und am Transportkanal ein Kühlmittel zur Abkühlung des Presskuchens vorgesehen ist.

11. Vorrichtung gemäss einem der Ansprüche 1 bis 10, dadurch gekennzeichnet, dass unter dem Kasten ein Behälter angeordnet ist, in welchen die getrockneten vom Oel aus dem Oel filtrierten, festen Bestandteile fallen, nachdem sie durch die eigene Schwerkraft durch eine Oeffnung im Boden (40) getreten sind.

12. Vorrichtung gemäss einem der Ansprüche 1 bis 11, dadurch gekennzeichnet, dass im Boden, oder in der Wand (1) des Kastens Oeffnungen (26) vorgesehen sind, durch welche die festen Pressrückstände in einen unterhalb des Bodens des Kastens stehenden Behälter (27) fallen.

13. Vorrichtung gemäss einem der Ansprüche 1 bis 12 dadurch gekennzeichnet, dass sie zusätzlich einen mit einem Verbrennungs-Motor angetriebenen Generator (38) enthält, der die für die Verarbeitung der Oelsaat notwendige elektrische Energie produziert.

14. Vorrichtung gemäss einem der Ansprüche 1 bis 13, dadurch gekennzeichnet, dass der Kasten derartige Dimensionen aufweist, dass die ganze Vorrichtung leicht auf der Strasse und/oder Schiene transportierbar ist.

15. Verwendung der Vorrichtung gemäss Ansprüchen 1 bis 14 zur Herstellung von biologisch, abbaubaren Schmiermitteln und erneuerbaren Treibstoffen, in denen die Hauptkomponente aus pflanzlichen Saatkörnern gewonnenes Oel darstellt.

## Claims

1. Apparatus for the production of purified plant oils starting with oil-seeds, comprising at least one funnel (5) for collecting the seeds with underneath at least one screw-press (21) with underneath at least one tank (22), a filtration device (30) with a mean (28) for transporting the oil, characterized by the feature, that all this machinery is built into a compact, transportable container, which has in the ceiling (4) a hole with a cover (6) which can be opened and closed, with a funnel (5) underneath, serving for the collection of seeds and with openings (34, 26, 40) in the floor by which the oil and the cake can be evacuated to the outside.

2. Apparatus according to claim 1 characterized by the feature that the container (1) stands in the working position on minimum four, vertical legs (13) so that the floor of the container is positioned according to the length of the legs at least 80 cm, at the maximum 150 cm above the ground, whereas these vertical legs can be overturned, retracted, or removed for the transport.

3. Apparatus according to claims 1 or 2 characterized by the feature that the bottom of the container is made of a welded steel profile onto which is screwed or welded a tub made of several layers of wood and aluminium pannels.

4. Apparatus according to one of the claims 1 to 3 characterized by the walls and the ceiling which are composed of elements, which consist of galvanized, vapour diffusion sealed layers of steel with a nucleus of hard polyurethan foam.

5. Apparatus according to one of the claims 1 to 4 characterized by a filtration device (30) with remouvable filter-elements, remouvable from or introduceable into the container from the outside through a hole (11) with a cover which can be opened and closed.

6. Apparatus according to one of the claims 1 to 5 characterized by the feature that it contains a compressor (31) and a air-tank (32) serving for drying and remouving filtered solid parts of the oil.

7. Apparatus according to one of the claims 1 to 6 characterized by the feature that it contains in addition means (23) for mixing fluids and suspending solid particles.

8. Apparatus according to one of the claims 1 to 7 characterized by the feature that the funnel (5) is made of a heat conducting material and that a mean (17) for the flow of warm inside-air to the outside of the funnel is provided, so that the warmth of the inside-air can be transmitted to the funnel (5).

9. Apparatus according to one of the claims 1 to 8 characterized by the existence of a device (16,17,20) for heating and drying the seeds (19) mounted between the funnel (5) and the screw press (21).

10. Apparatus according to one of the claims 1 to 9 characterized by the feature that it contains a conveying-device (24) by which the cake produced during the pressing operation is being transported and that the transportation channel is provided with a mean for cooling the cake.

11. Apparatus according to one of the claims 1 to 10 characterized by the feature that a case can be positioned below the container for the collection of dryed solid particles filtered from the oil, after they have fallen through an opening in the floor (40).

12. Apparatus according to one of the claims 1 to 11 characterized by the features that there are openings (26) in the floor, or in the walls (1) through which the solid remainings of the pressing procedure fall into a case placed beneath the container.

13. Apparatus according to one of the claims 1 to 12 characterized by the feature that it contains in addition a generator (38) driven by a combustion-engine which produces the necessary electrical energy for the transformation of the oil seeds.

14. Apparatus according to one of the claims 1 to 13 characterized by the feature that the container has dimensions, which allow its easy transport on the road and/or the rail.

15. Use of the apparatus according to claims 1 to 14 for the production of biologically degradable lubricants and renewable fuels of which the main component is plant oil recovered from oil-seeds.

## Revendications

1. Appareil pour la production d'huile végétale purifiée de graines oléagineuses, comprenant au minimum, un entonnoir (5) recueillant des graines, un pressoir (21) placée au-dessous (21), d'une cuve (22), un filtre (30) avec un moyen (28) pour le transport de l'huile, caractérisée par une installation compacte construite dans un container transportable avec un toit (4) un couvercle (6) avec fermeture permettant de remplir l'entonnoir (5) de graines et des ouvertures (34-26-40) dans le fond du container permettant de récolter l'huile et le tourteau à l'extérieur.

2. Appareil conforme à la revendication 1 caractérisé par le container (1) qui dans la position de travail repose sur minimum quatre pieds (13) verticaux de sorte que le fond du container se trouve selon la longueur des pieds à une hauteur minimale de 80 cm et maximale de 150 cm de la surface du sol.

3. Appareil conforme à la revendication 1 ou 2 caractérisé par le fait que le fond du container conmposé d'un profil en acier sur lequel on place une cuve à plusieurs couches de bois et d'aluminium collées les unes avec les autres.

4. Appareil conforme à une des renvendications 1 à 3 caractérisé par les parois et le toit de la caisse composés d'éléments faits de panneaux métalliques zingués avec un noyau isolant de mousse durcie de polyuréthane étanche à la diffusion de vapeur.

5. Appareil conforme à une des revendications 1 à 4 caractérisé par l'installation de filtration (30) dont les éléments filtrants sont échangeables de l'extérieur du container par une ouverture munie d'une fermeture.

6. Appareil conforme à une des renvendications 1 à 5 caractérisé par le fait qu'il contient un compresseur (31) et un réservoir d'air (32) servant au séchage et à l'enlèvement des parties solides de l'huile filtrée.

7. Appareil conforme à une des revendications 1 à 6 caractérisé en plus par un moyen (23) permettant de mélanger des fluides et de suspendre des particules solides.

8. Appareil conforme à une des revendications 1 à 7 caractérisé par le fait que l'entonnoir soit constitué en un matériel conducteur de chaleur et un moyen (17) pour amener de l'air chaud intérieur à la paroi externe de l'entonnoir (5) de sorte que la chaleur de l'air chaude intérieure puisse être transmise à l'entonnoir (5).

9. Appareil conforme à une des revendications 1 à 8 caractérisé par un dispositif (16, 17 20) placé entre l'entonnoir (5) et le pressoir (21) permettant de chauffer et de sécher les graines.

10. Appareil conforme à une des revendications 1 à 9 caractérisé par un dispositif de transport (24) pour evacuer le tourteau après le pressage dans une conduite par laquelle on amène un moyen froid servant à refroidir le tourteau.

11. Appareil conforme à une des revendications 1 à 10 caractérisé par un réservoir placé sous le container dans lesquels peuvent tomber, à travers une ouverture, du fond (40), sur la base de la gravité, les particules solides séchées, obtenues après filtration.

12. Appareil conforme à une des revendications 1 à 11 caractérisé par des ouvertures (26) dans le fond ou dans les parois (1) du container pour que les restes solides du pressoir puissent tomber dans un réservoir (27) placé en dessous du container.

13. Appareil conforme à une des renvendications 1 à 12 caractérisé par un moteur à combustion actionnant une génératrice (38) produitsant l'énergie électrique nécessaire pour la transformation des graines oléagineuses.

14. Appareil conforme aux revendications 1 à 13 caractérisé par les dimensions du container qui sont telles que le dispositif puisse être transporté facilement soit sur la route et/ou le rail.

15. Utilisation de l'appareil conforme aux revendications 1 à 14 pour la fabrication de lubrifiants biodégradables et de carburants renouvelables dont la composante principale consiste en huile végétale à partir de graines oléagineuses.
